# EUROPEAN PATENT APPLICATION

(11) **EP 2 190 175 A1**
(43) Date of publication of application: **26.05.2010**
(21) Application number: 09176324.3
(22) Date of filing: 18.11.2009
(51) Int. Cl.: H04M 1/725, H04M 1/73

(54) **Apparatus and method of changing the mode of operation of an apparatus**

(30) Priority: 20.11.2008 GB 0821276
(71) Applicant: Nokia Corporation, 02150 Espoo (FI)
(72) Inventor: Hazlett, Peter, Cambridge, Greater London CB1 7UB (GB); Gibson, William, Cambridge, Greater London CB3 0QH (GB)
(74) Representative: Andrews, Claire

(57) **Abstract**

An apparatus arranged to operate in a plurality of modes. Each mode is indicative of a relationship with the environment which the apparatus is in, or indicative of the environment which the apparatus is in. The apparatus is further arranged to receive radio signals and to determine, on the basis of said radio signals, the mode of operation of said apparatus.

## Description

Examples of the present invention relate to an apparatus which may be arranged to change its mode of operation based on device movement or based on the environment which the device is in. Examples of the present invention also relate to a corresponding method.

### Background to the Invention

GPS (Global Positioning System) devices take various forms. In-car devices provide navigation information for vehicle users and handheld devices provide navigation information for pedestrians. Many modern mobile phones now include a GPS chipset. Software loaded on to a mobile phone can use position information provided by a GPS chipset to provide in-car and pedestrian navigation information.

### Summary of Examples of the Invention

An example of the present invention provides an apparatus arranged to: operate in a plurality of modes, each mode being indicative of a relationship with the environment which the apparatus is in, or indicative of the environment which the apparatus is in; and receive radio signals and to determine, on the basis of said radio signals, the mode of operation of said apparatus.

In an example, at least one mode of operation causes said apparatus to use less power than other of said modes of operation.

In an example, the apparatus is further arranged to: operate in a first mode when the apparatus is determined to be moving at a speed greater than a predetermined value; and operate in a second mode when the apparatus is determined to be moving at a speed less than said predetermined value.

In an example, the apparatus further comprises a satellite positioning module, wherein said radio signals are satellite positioning radio signals.

In an example, in said first mode of operation said satellite positioning module is configured to calculate position information at a first rate.

In an example, in said second mode of operation said satellite positioning module is configured to calculate position information at a second rate, which is lower than said first rate.

In an example, the apparatus further comprises a high frequency short range radio module, and said apparatus is further arranged to, in said first mode, turn said radio module off.

In an example, the apparatus is, further arranged to operate in a third mode when the apparatus is determined to be stationary.

In an example, the apparatus further comprises a mobile phone radio, wherein said radio is configured to monitor the signal strength of a plurality of signals received from a plurality of base stations.

In an example, the apparatus is further arranged to determine the rate of change of the signal strength of said signals.

In an example, the apparatus is further arranged to enter said third mode when it is determined that the rate of change of the signal strength of all received signals is approximately zero.

In a further example, the present invention provides an apparatus arranged to: operate in a plurality of modes, each mode being indicative of the apparatus's relationship with the environment which it is in, or indicative of the environment which it is in; enable a different set of functions or hardware in each mode of operation of the device; and automatically determine the mode of operation.

In a further example, the present invention provides a method comprising: receiving radio signals at an apparatus; and determining a mode of operation of said apparatus based on said received radio signals; wherein each mode is indicative of a relationship with the environment which the apparatus is in, or indicative of the environment which the apparatus is in.

In a further example, the present invention provides a computer program comprising: code for processing radio signals received at an apparatus; and code for determining a mode of operation of said apparatus based on said received radio signals; wherein each mode is indicative of a relationship with the environment which the apparatus is in, or indicative of the environment which the apparatus is in.

In a further example,. the present invention provides a computer-readable medium encoded with instructions that, when executed by a computer, perform the method defined above.

This summary provides examples of the invention which are not intended to be limiting on the scope of the invention. The features of the invention described above and recited in the claims may be combined in any suitable manner. The combinations described above and recited in the claims are not intended to limit the scope of the invention.

Features and advantages associated with the examples of the invention will be apparent from the following description of some examples of the invention.

### Brief Description of the Drawings

Examples of the invention will now be described in more detail, by way of example only, with reference to the accompanying drawings in which:
Figure 1 shows an apparatus in accordance with an example embodiment of the invention;
Figure 2 is a schematic diagram of an example of the components of the apparatus shown in Figure 1;
Figure 3 is a schematic diagram of an example of the memory components of the apparatus shown in Figure 1;
Figure 4 shows an example of the layers of an operating system loaded on the apparatus shown in Figure 1;
Figure 5 is a flow-chart showing an example method of operation of the apparatus shown in Figure 1;
Figure 6 is a flow-chart showing an example method of operation of the apparatus shown in Figure 1;
Figure 7 is a flow-chart showing an example method of operation of the apparatus shown in Figure 1;
Figure 8 is a schematic diagram showing an example environment which the apparatus shown in Figure 1 may operate; and
Figure 9 is a flow-chart showing an example method of operation of the apparatus shown in Figure 1.

### Detailed Description of Example Embodiments

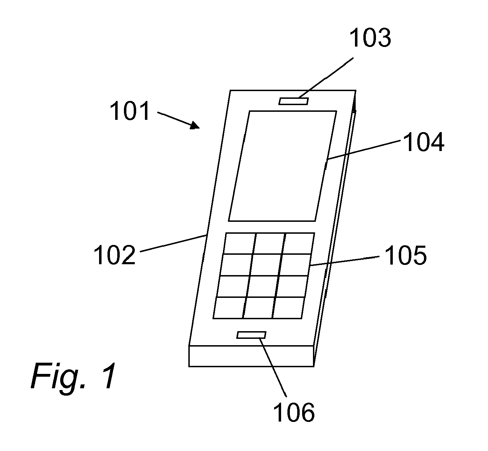

A mobile device 101, which is arranged to operate in accordance with a first example embodiment of the present invention, is shown in Figure 1. In this example, the mobile device 101 comprises an outer casing 102, which includes an earphone 103 and a microphone 104. In this example, the mobile device 101 also includes a keypad 105 and a display 106. In this example, the keypad 105 enables a user to enter information into the mobile device 101 and instruct the mobile device to perform the various functions which it provides. For example, a user may enter a telephone number, or select another mobile device from a list stored on the mobile device 101, as well as perform functions such as initiating a telephone call.

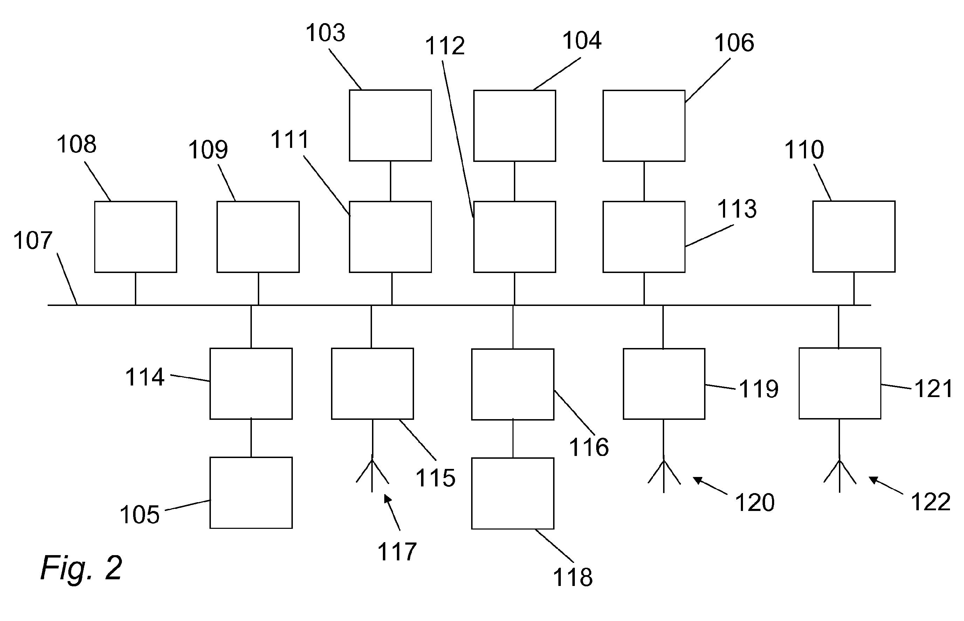

Figure 2 is a schematic diagram showing the components of the mobile device 101 in an example embodiment. In this example, the device includes a system bus 107 to which the components are connected and which allows the components to communicate with each other. In this example, the components are shown to communicate via a single system bus 107. However, in another example, the mobile device may include several buses to connect the various components. In this example, the components of the mobile device 101 include an application processor 108, a baseband processor 109, memory 110, an earphone controller 111, a microphone controller 112, a display controller 113, a keyboard controller 114, a CDMA radio 115 and a storage device controller 116. In this example, the application processor 108 is for running an operating system and user applications. In this example, the baseband processor 109 is for controlling a telephony stack. In this example, the CDMA radio 115 is also connected to an antenna 117. In this example, the mobile device 101 is arranged to communicate, via CDMA radio 115, with a base station of a CDMA mobile phone network. In this example, the storage device controller 116 is connected to a storage device 118 which may be an internal hard drive or a removable storage device such as a flash memory card. In this example, the mobile device 101 also includes a GPS (Global Positioning System) module 119 which is connected to a GPS antenna 120. In this example, the mobile device 101 also includes an IEEE 802.11 radio 121 which is connected to an antenna 122.

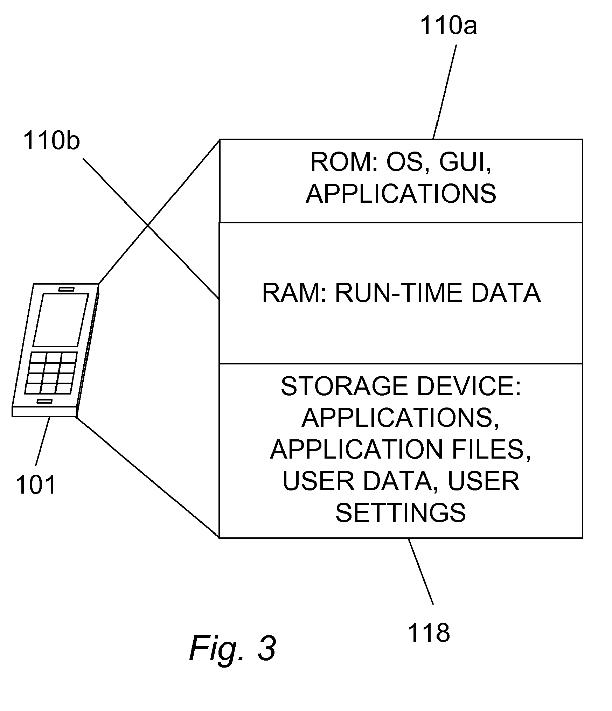

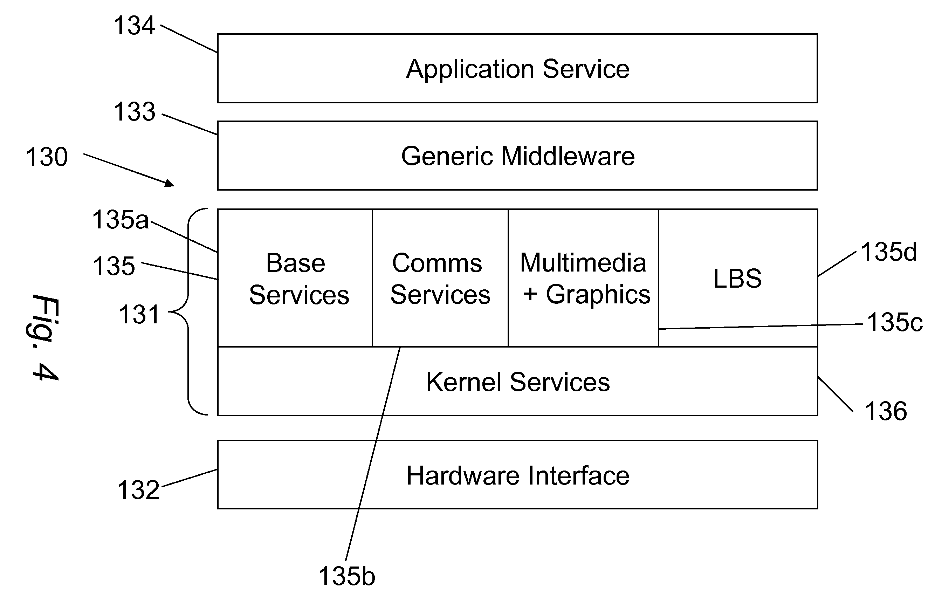

As seen in the example embodiment shown in Figure 3, the memory 110 includes Random Access Memory (ROM) 110a and Read Only Memory (RAM) 110b. In this example, the ROM 110a has stored thereon an operating system 130 (see Figure 4), a graphical user interface (GUI) and otherl applications. In this example, the storage device 118 has stored thereon user applications, user files, user data and user settings.

In this example, the operating system 130 provides an interface between hardware, such as the GPS module 119 and the IEEE 802.11 radio 121 and operating system and application clients. Figure 4 shows the main layers of operating system 130 in an example embodiment. In this example, the operating system 130 includes a core OS layer 131, a hardware interface layer 132, a generic middle ware layer 133 and an application services layer 134. In this example, the core OS layer 131 includes OS services sub-layer 135 and a kernel services sub-layer 136. In this example, the OS services sub-layer 135 includes base services 135a, comms services 135b, multimedia and graphics services 135c and location based services (LBS) 135d.

In this example, LBS 135d includes a location API (Application Programming Interface) (not shown). In this example, the location API enables OS and application clients to obtain information such as longitude, latitude, speed, altitude and bearing (collectively "position information"). In this example, the GPS module 119 provides this information at the request of LBS 135d. In this example, the GPS module 119 is arranged to calculate current position information at regular intervals. In this example, the rate of position calculation may be varied in accordance with pre-stored algorithms or manually by a user of the mobile device 101. These mechanisms will be described in more detail below.

In this example, base services 135a includes a power manager. In this example, the power manager is arranged to monitor various parameters and provide indicators to application and OS clients enabling power saving schemes to be implemented. In this example, the power manager includes a power management API. The power manager will be described in more detail below.

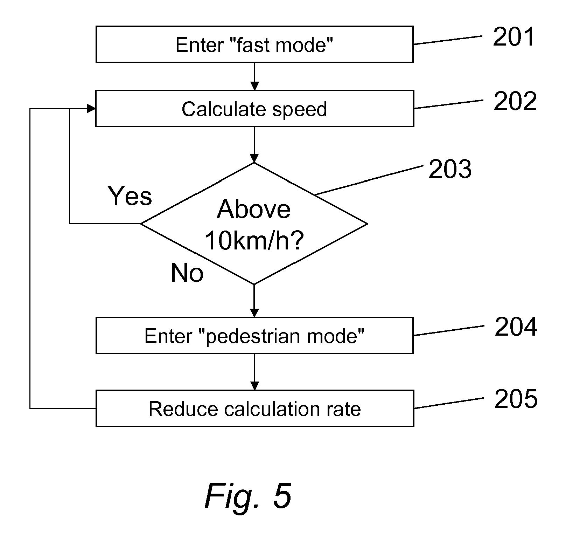

A first mode of operation of the mobile device 101, in an example embodiment, will now be described with reference to Figure 5. As noted above, in an example embodiment, the GPS module 119 determines position information at regular intervals. In this example, when the mobile device 101 is switched on, or when the GPS module 119 is activated, the GPS module 119 enters a "fast mode" (block 201). In this example, in fast mode, the GPS module 119 calculates position once every half second (the actual calculation rate will depend on the chipset used by the GPS module 119). In this example, once activated, the GPS module 119 calculates the speed at which the device 101 is moving (block 202) together with other position information. In this example, the power manager monitors this information via the location API. In this example, the power manager is arranged to check if the calculated speed is above 10 km/h (block 203). In this example, if the calculated speed is above 10km/h, the power manager informs the LBS 135d via the power management API that the device is moving at a speed greater than 10km/h. In this example, the GPS module 119 remains in fast mode, the process returns to block 202 and repeats. In this example, if the calculated speed is below 10km/h, the power manager informs the GPS module 119 that this is the case. In this example, the GPS module switches to "pedestrian mode" (block 204). In this example, in pedestrian mode, the GPS module 119 reduces the position calculation rate (block 205). In this example, the rate is reduced to once every three seconds. In this example, the process then returns to block 202.

In this example, while the calculated speed remains below 10km/h, the GPS module 119 remains in pedestrian mode. In this example, while the calculated speed remains above 10 km/h, the GPS module 119 remains in fast mode. In this example, any change in speed above or below the 10km/h threshold results in a change of mode. In the above mechanism the power manager monitors speed and provides the GPS module 119 with information which enables it to change mode. This mechanism could be implemented within the GPS module 119 itself.

In this example, the mobile device 101 is able to operate in this manner because position information is required less frequently when moving slowly. In this example, the position information produced by the GPS module 119 is used by a navigation program running on the mobile device 101. In this example, when the mobile device 101 is being used for car navigation, it is important that position information is generated frequently. When travelling at high speeds, junctions can appear very quickly and it is important that the navigation program can accurately predict the arrival of turnings. However, when a user is travelling slowly, either because they are on foot or in a traffic jam, position information is not required as frequently.

An advantage of this example embodiment is a reduction in power consumption. In an example embodiment, when the device operates in pedestrian mode, there is a considerable power saving. In an example, the GPS module 119 draws a lot more power when calculating position than when idle. This example is advantageous for a pedestrian because they do not typically have a back-up power supply.

In this example, the power manager provides an indication to any client monitoring the power management API as to whether the device is moving faster or slower than 10 km/h. In this example, this information can be used to control other hardware modules such as the IEEE 802.11 radio 121. In this example, when moving at a speed greater than 10 km/h, it is unlikely that the IEE 802.11 radio 121 will be able to connect to a WLAN access point. In this example, the mobile device 101 is moving too quickly for this to occur. In this example, the operating system 130 may therefore arranged to turn the IEEE 802.11 radio 121 off when the device is moving at a speed greater than 10 km/h.

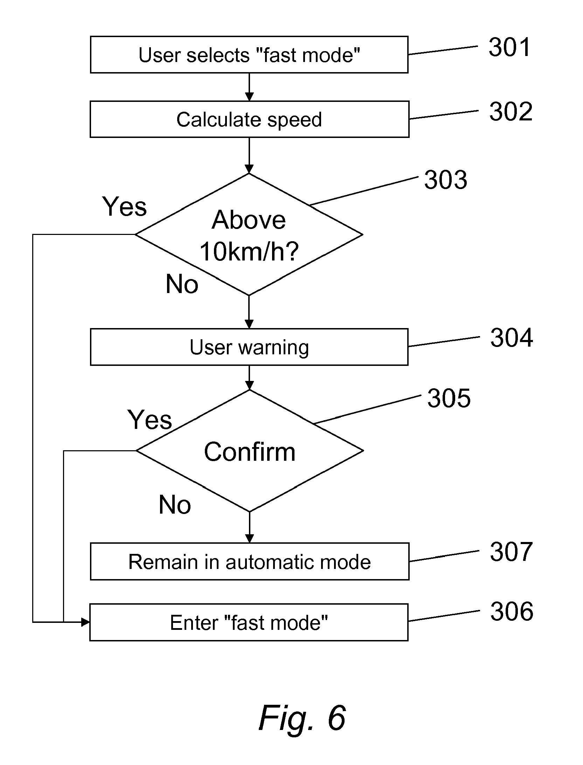

In addition, in this example, the mobile device 101 is arranged to allow the user to manually override the above-described mechanism. The process of manually switching to fast mode will now be described with reference to the example embodiment shown in Figure 6. Initially, in this example, the mobile device 101 is operating autonomously in accordance with the process shown in Figure 5. In this example, if, at any point in that process, the user manually selects "fast mode" (block 301), the process shown in Figure 5 is interrupted. In this example, the GPS module 119 then calculates current speed (block 302). In this example, the power manager checks whether or not the speed is above 10km/h (block 303). In this example, if "no", the mobile device 101 warns the user (block 304) that device is moving below 10km/h and asks the user to confirm that they wish to enter fast mode (block 305). In this example, the GPS module 119 then enters "fast mode" (block 306). In this example, if the user indicates "no", the device remains in automatic mode (block 307).

In this example, the power manager is arranged to periodically check whether or not the current speed is above or below 10 km/h during manual override. In this example, if the speed of the mobile device 101 drops below 10km/h, the mobile device may remind the user that they have manually entered fast mode. In this example, the frequency with which the power manager checks the current speed can be varied as required. In this example, the mobile device 101 can be set up so that no reminder is made. In an alternative example, once a user has been reminded about the change of speed once, the user can choose to receive no further reminders.

It will be appreciated that, in an example embodiment, the speed threshold and the position calculation rate may be varied as required in any particular situation in order best utilise the aforementioned advantages. Furthermore, although a single speed threshold has been described above, it would be possible, in an example embodiment, to have several thresholds, e.g. slow, intermediate and fast modes.

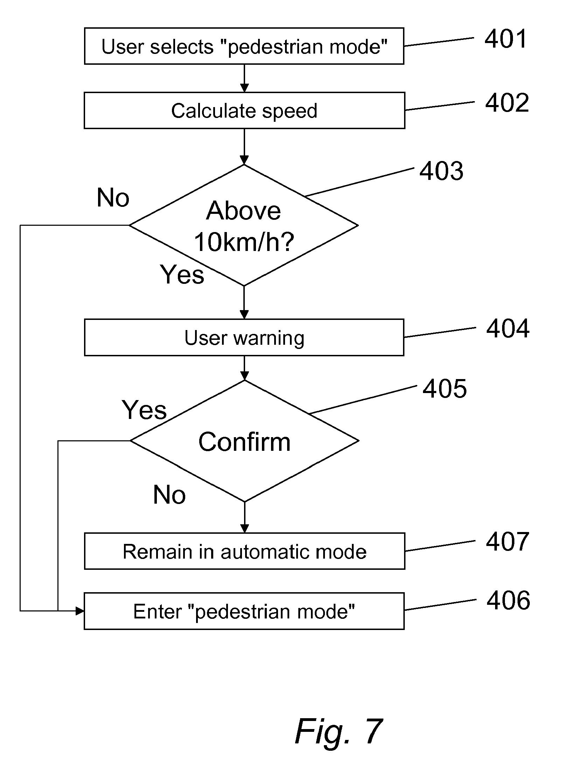

The process of manually switching to pedestrian mode, in an example embodiment, will now be described with reference to Figure 7. In this example, initially, the module is operating autonomously in accordance with the process shown in Figure 5. In this example, if, at any point in that process, the user manually selects "pedestrian mode" (block 401), the process shown in Figure 5 is interrupted. In this example, the GPS module 119 then calculates current speed (block 402). In this example, the power management module checks whether or not the speed is above 10km/h (block 403). In this example, if "yes", the mobile device 101 warns the user (block 404) that device is moving above 10km/h and asks the user to confirm that they wish to enter pedestrian mode (block 405). In this example, the GPS module 119 then enters "pedestrian mode" (block 406). In this example, if the user indicates "no", the device remains in automatic mode (block 407).

In this example, if the power management module detects that a charger has been connected to the mobile device 101, the GPS module 119 switches to fast mode automatically. In this example, the power savings achieved with pedestrian mode are not necessary when the mobile device 101 is charging.

The mobile device 101 is further arranged to operate in accordance with a further example embodiment. As noted above, mobile device 101 may include a CDMA radio 115. In this example, the CDMA radio 115 is arranged to monitor CDMA radio signals and make various measurements as is required of mobile phone radios. For example, the CDMA radio 115 measures the strength of a signal received from a base station.

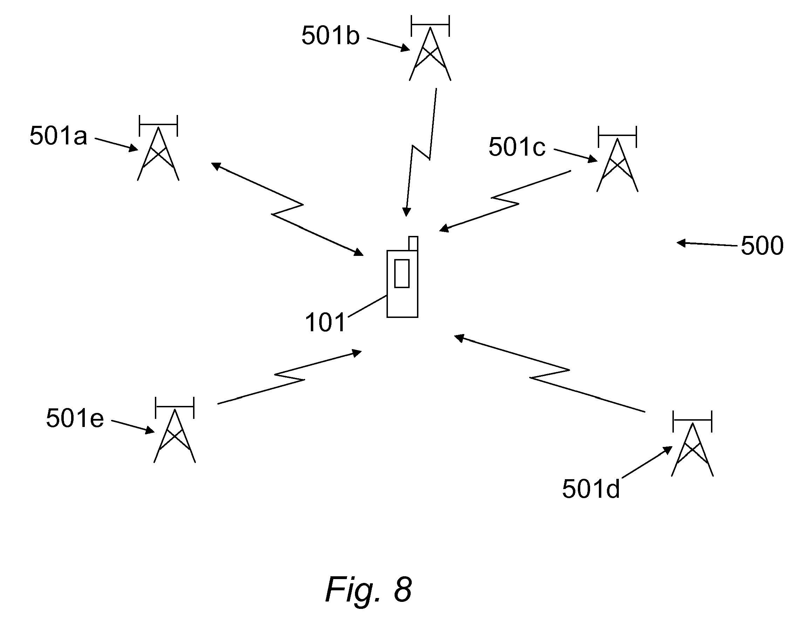

Figure 8 shows mobile device 101 and base stations 501 a to 501e in an example embodiment. In this example, each base station is connected to a Radio Network Controller (RNC) which forms part of a UMTS Terrestrial Radio Access Network (UTRAN). In this example, the RNCs are in turn connected to the Core Network.

In this example, the base stations 501 a to 501 e are all close enough to the mobile device 101 for the device to establish radio communication through each one of the base stations. In this example, the mobile device 101 establishes a connection through one of the base stations. In this example, this base station will be referred to as the serving base station. In this example, each base station provides a number of sectors, and the mobile device 101 establishes a connection through one of the sectors. In this example, each base station transmits a signal via its broadcast channel (BCCH). In this example, these signals are monitored by all mobile devices in order for the mobile devices to establish which base station provides the best signal strength and which base station (or sector) should be used for future communications. In this example, as a mobile device moves around, a connection may be "handed-off" to other base stations or base station sectors. In this example, the base stations which are not currently serving a base station are referred to as neighbouring base stations.

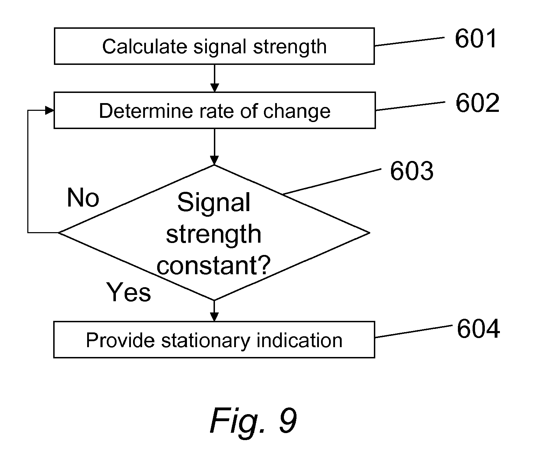

In the example embodiment shown in Figure 8, the CDMA radio 115 monitors the signal strength of signals arriving from its serving base station (base station 501 a) and the signal strength of signals arriving from neighbouring base stations (base stations 501 b to 501 e). In this example, the degree to which these signals vary can be used to give an indication as to whether or not the device 101 is moving. The algorithm used by the mobile device 101, in one example, will now be described with reference to the example shown in Figure 9.

As noted above, the mobile device 101 may receive signals from a number of different base stations. In this example, each base station 501 a to 501e continuously transmits a stream of data over the BCCH. In this example, the mobile device 101 monitors these signals to determine which base station provides the strongest signal (block 601). This information may be passed to the power manager. In this example, the power manager determines the rate of change of the signal strength of each BCCH (block 602). In this example, the power manager includes a Kalman filter. In this example, a Kalman filter is a mathematical algorithm for smoothing measurements based on past results. In this example, Kalman filters may be used to predict position or speed when past results include a degree of error. In this example, the filter uses several past results to reduce the error in the predicted position or speed. In this example, the Kalman filter is used with the BCCH signals in order to estimate the current BCCH signal. In this example, this is done based on previous and current measurements. In this example, the power manager then determines whether or not the signal strength is constant for all BCCH signals (block 603). In this example, if the signal strength of all BCCH signals remains constant for more than one second, the power manager indicates that the mobile device 101 is stationary (block 604).

In this example, various clients may monitor the power manager via the power management API. For example, the IEEE 802.11 radio 121 is arranged to scan for WLAN hotspots when the power manager indicates that the device is stationary. In this example, if, after 60 seconds, the application is no longer receiving a stationary signal, and if no hotspot has been located, the power manager may turn the IEEE 802.11 radio 121 off. In this example, if a hotspot has been located, the IEEE 802.11 radio 121 remains on until switched off by a user. In this example, LBS 135d is arranged to switch the GPS module 119 off when the power manager indicates that the device is stationary.

In an example embodiment, the signal strength of one or more signals may vary due to atmospheric conditions. Therefore, in this example, the device 101 could be stationary, despite the signal strength of one or more signals varying. In an alternative example embodiment, the device could monitor a single BCCH. However, a single signal may be varying (due to atmospheric conditions) indicating that the device is moving, when in fact it is stationary. Therefore, in a further example embodiment, the power manager could make a "stationary" determination based on around half the signals the device is receiving.

In a further example embodiment, the device may monitor timing advance signals. In a TDMA (Time Division Multiple Access) system, each mobile device operating in a cell or sector is allocated a frequency which it shares with a number of mobile devices. Each mobile device is allocated a time slot in which it may transmit a signal. The slot is actually the time in which the base station may receive the transmitted signal. Because the distance that a mobile device is from the base station varies, and because there is a delay propagation of the signal over the air interface, the time at which a signal must be transmitted may be slightly before the actual beginning of the time slot. A timing advance code is calculated by a base station and sent to a mobile device. The timing advance code is based on how far the mobile device is from the base station and tells the mobile device how far ahead of a time slot it should begin transmitting. In this example, the rate of change of the timing advance signal may give a good indication as to whether or not the device is moving.

The mobile device 101 is also arranged to operate in accordance with a further example embodiment. When a mobile phone is in-doors or underground, signals received by it may significantly weaken, or disappear completely. In this example, the mobile device 101 receives both mobile phone signals, and GPS signals. In this example, if both of these signals disappear, the device may switch the GPS module 119 off. In this example, as it is possible that the device is in-doors, the device 101 may switch the IEEE 802.11 radio 121 on. This is because, in this example, it is more likely that a WLAN hotspot will be present when the device is in-doors than when it is outside.

In this example, the signals may not disappear completely, but instead may weaken. In this example, the device is pre-programmed with a signal level threshold. In this example, the device takes the above action when signal levels fall below these thresholds.

In a further example embodiment, the device may be switched into different modes by the user. In this example, the above-described mechanisms may be turned off at a user's discretion.

An IEEE 802.11 radio is more commonly referred to as a WiFi™ radio. Such radios are high frequency short range radios which are arranged to connect to WiFi™ hotspots.

Examples of the present invention may be implemented in software, hardware, application logic or a combination of software, hardware and application logic. The software, application logic and/or hardware may reside on an individual component, computer chip or other computing apparatus. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 1. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

In an example, the present invention provides an apparatus which is further arranged to, in a third mode, switch off the satellite positioning module.

In an example, the present invention provides an apparatus which is further arranged to operate in a fourth mode when the apparatus is determined to be in-doors.

In an example, the present invention provides an apparatus which is further arranged to determine that the apparatus is in-doors if the satellite signal level drops below a predetermined level.

In an example, the present invention provides an apparatus which is further arranged to switch the satellite positioning module off in said fourth mode.

In an example, the apparatus is a mobile phone.

The present invention may also provide an apparatus comprising: means to operate the apparatus in a plurality of modes, each mode being indicative of a relationship with the environment which the apparatus is in, or indicative of the environment which the apparatus is in; and means to receive radio signals and means to determine, on the basis of said radio signals, the mode of operation of said apparatus.

Various modifications, changes, and/or alterations may be made to the above described embodiments to provide further embodiments which use the underlying inventive concept, falling within the spirit and/or scope of the invention. Any such further embodiments are intended to be encompassed by the appended claims.

## Claims

1. An apparatus arranged to:
operate in a plurality of modes, each mode being indicative of a relationship with the environment which the apparatus is in, or indicative of the environment which the apparatus is in; and
receive radio signals and to determine, on the basis of said radio signals, the mode of operation of said apparatus.

2. An apparatus according to claim 1, wherein at least one mode of operation causes said apparatus to use less power than other of said modes of operation.

3. An apparatus according to claims 1 or 2, further arranged to:
operate in a first mode when the apparatus is determined to be moving at a speed greater than a predetermined value; and
operate in a second mode when the apparatus is determined to be moving at a speed less than said predetermined value.

4. An apparatus according to claims 1, 2 or 3, further comprising a satellite positioning module, wherein said radio signals are satellite positioning radio signals.

5. An apparatus according to claim 4, wherein, in said first mode of operation said satellite positioning module is configured to calculate position information at a first rate.

6. An apparatus according to claims 4 or 5, wherein, in said second mode of operation said satellite positioning module is configured to calculate position information at a second rate, which is lower than said first rate.

7. An apparatus according to any preceding claim, further comprising a high frequency short range radio module, and said apparatus is further arranged to, in said first mode, turn said radio module off.

8. An apparatus according to any preceding claim, further arranged to operate in a third mode when the apparatus is determined to be stationary.

9. An apparatus according to any preceding claim, further comprising a mobile phone radio, wherein said radio is configured to monitor the signal strength of a plurality of signals received from a plurality of base stations.

10. An apparatus according to claim 9, further arranged to determine the rate of change of the signal strength of said signals.

11. An apparatus according to claim 10, further arranged to enter said third mode when it is determined that the rate of change of the signal strength of all received signals is approximately zero.

12. An apparatus arranged to:
operate in a plurality of modes, each mode being indicative of the apparatus's relationship with the environment which it is in, or indicative of the environment which it is in;
enable a different set of functions or hardware in each mode of operation of the device; and
automatically determine the mode of operation.

13. A method comprising:
receiving radio signals at an apparatus; and
determining a mode of operation of said apparatus based on said received radio signals; wherein
each mode is indicative of a relationship with the environment which the apparatus is in, or indicative of the environment which the apparatus is in.

14. A computer program comprising:
code for processing radio signals received at an apparatus; and
code for determining a mode of operation of said apparatus based on said received radio signals; wherein
each mode is indicative of a relationship with the environment which the apparatus is in, or indicative of the environment which the apparatus is in.

15. A computer-readable medium encoded with instructions that, when executed by a computer, perform the method of claim 13.
